# EUROPÄISCHE PATENTSCHRIFT

(11) **EP 3 615 827 B1**
(45) Veröffentlichungstag und Bekanntmachung des Hinweises auf die Patenterteilung: **12.05.2021**
(21) Anmeldenummer: 18713153.7
(22) Anmeldetag: 14.03.2018
(51) Int. Cl.: F16D 48/06

(54) **VERFAHREN ZUM BETREIBEN EINER KUPPLUNG EINES ANTRIEBSSTRANGS FÜR EIN KRAFTFAHRZEUG SOWIE KRAFTFAHRZEUG MIT EINEM ANTRIEBSSTRANG**
METHOD FOR OPERATING A CLUTCH OF A DRIVE TRAIN FOR A MOTOR VEHICLE AND MOTOR VEHICLE HAVING A DRIVE TRAIN
PROCÉDÉ POUR LE FONCTIONNEMENT D'UN EMBRAYAGE D'UNE CHAÎNE CINÉMATIQUE POUR UN VÉHICULE AUTOMOBILE AINSI QUE VÉHICULE AUTOMOBILE COMPRENANT UNE CHAÎNE CINÉMATIQUE

(30) Priorität: 26.04.2017 DE 102017207037
(43) Veröffentlichungstag der Anmeldung: 04.03.2020
(73) Patentinhaber: Audi AG, 85045 Ingolstadt (DE)
(72) Erfinder: BIRK, Andreas, 90402 Nürnberg (DE); GOTTLIEB, Dominik, 85055 Ingolstadt (DE)
(86) Internationale Anmeldenummer: PCT/EP2018/056409
(87) Internationale Veröffentlichungsnummer: WO 2018/197099

(56) Entgegenhaltungen:
- EP-A1- 2 910 821
- DE-A1- 10 160 308
- DE-A1-102016 115 534
- US-A1- 2006 161 325

## Beschreibung

Die Erfindung betrifft ein Verfahren zum Betreiben einer Kupplung eines Antriebsstrangs für ein Kraftfahrzeug gemäß dem Oberbegriff von Patentanspruch 1, sowie ein Kraftfahrzeug gemäß dem Oberbegriff von Patentanspruch 7.

Ein solches Verfahren zum Betreiben einer beispielsweise als Reibkupplung ausgebildeten Kupplung eines Antriebsstrangs für ein Kraftfahrzeug sowie ein solches Kraftfahrzeug sind bereits aus der DE 101 50 597 A1 bekannt. Bei dem Verfahren wird mittels einer elektronischen Recheneinrichtung des Antriebsstrangs wenigstens ein Mikroschlupf der Kupplung gezielt eingestellt, wodurch die Kupplung während wenigstens einer Betriebsphase mit dem Mikroschlupf betrieben wird. Der Mikroschlupf ist in der DE 101 50 597 A1 anschaulich erklärt. Unter einem Mikroschlupf ist insbesondere zu verstehen, dass sich eine Eingangsseite der Kupplung beziehungsweise wenigstens ein auf der Eingangsseite der Kupplung angeordnetes erstes Bauelement der Kupplung mit einer ersten Drehzahl und eine Ausgangsseite der Kupplung beziehungsweise wenigstens ein auf der Ausgangsseite angeordnetes und von dem ersten Bauelement antreibbares zweites Bauelement der Kupplung mit einer zweiten Drehzahl dreht, wobei sich die Drehzahlen geringfügig voneinander unterscheiden. Der Mikroschlupf ist somit ein geringfügiger Schlupf, welcher beispielsweise in einem Bereich von einschließlich 10 Umdrehungen pro Minute bis einschließlich 50 Umdrehungen pro Minute liegt.

Üblicherweise wird die Kupplung als Trennkupplung genutzt, um eine Abtriebswelle eines zum Antreiben des Kraftfahrzeugs ausgebildeten Antriebsmotors mit einer weiteren Welle zu koppeln und von der weiteren Welle zu entkoppeln, sodass zwischen der Abtriebswelle und der weiteren Welle Drehmomente über die Kupplung übertragen werden können. Die weitere Welle ist dabei beispielsweise eine Getriebeeingangswelle eines Getriebes des Antriebsstrangs. Ist der Mikroschlupf eingestellt, so dreht sich beispielsweise die drehfest mit der Eingangsseite der Kupplung verbundene Abtriebswelle mit einer höheren oder geringeren Drehzahl als die beispielsweise drehfest mit der Ausgangsseite der Kupplung verbundene weitere Welle. Das Betreiben der Kupplung mit Mikroschlupf kann vorteilhaft sein, um einen hohen Fahrkomfort, insbesondere bei Schaltungen eines Getriebes des Antriebsstrangs, realisieren zu können.

Des Weiteren offenbart die DE 10 2013 200 194 A1 ein Getriebe für ein Kraftfahrzeug mit einer Kraftmaschine, wobei das Getriebe ein Getriebegehäuse und eine Doppelkupplungsanordnung umfasst, die ein Kupplungsgehäuse aufweist. Das Kupplungsgehäuse ist mit einem Maschinenausgangselement verbindbar, wobei das Kupplungsgehäuse in dem Getriebegehäuse drehbar gelagert ist.

Außerdem ist aus der DE 10 2013 203 513 A1 ein Verfahren zum Kühlen eines Mehrgang-Doppelkupplungsgetriebes bekannt, das mit einer Brennkraftmaschine in einem Fahrzeug verbunden ist

Weitere Beispiele sind aus EP 2 910 821 A1 und DE 101 60 308 A1 bekannt.

Aufgabe der vorliegenden Erfindung ist es, ein Verfahren und ein Kraftfahrzeug der eingangs genannten Art derart weiterzuentwickeln, dass ein besonders effizienter Betrieb realisiert werden kann.

Diese Aufgabe wird durch ein Verfahren mit den Merkmalen des Patentanspruchs 1 sowie durch ein Kraftfahrzeug mit den Merkmalen des Patentanspruchs gelöst. Vorteilhafte Ausgestaltungen mit zweckmäßigen Weiterbildungen der Erfindung sind in den übrigen Ansprüchen angegeben.

Ein erster Aspekt der Erfindung betrifft ein Verfahren zum Betreiben einer beispielsweise als Reibkupplung ausgebildeten Kupplung eines Antriebsstrangs für ein Kraftfahrzeug, insbesondere für einen Kraftwagen wie beispielsweise einen Personenkraftwagen. Bei dem Verfahren wird mittels einer elektronischen Recheneinrichtung des Antriebsstrangs wenigstens ein Mikroschlupf der Kupplung gezielt eingestellt, wodurch die Kupplung während wenigstens einer Betriebsphase mit dem Mikroschlupf betrieben wird. Wie bereits eingangs beschrieben, ist unter dem Mikroschlupf ein geringfügiger Schlupf der Kupplung zu verstehen, sodass sich beispielsweise eine Eingangsseite der Kupplung beziehungsweise wenigstens ein auf der Eingangsseite angeordnetes erstes Bauelement der Kupplung mit einer ersten Drehzahl und eine Ausgangsseite der Kupplung beziehungsweise wenigstens ein auf der Ausgangsseite der Kupplung angeordnetes und beispielsweise von dem ersten Bauelement antreibbares zweites Bauelement der Kupplung mit einer zweiten Drehzahl dreht, die sich geringfügig von der ersten Drehzahl unterscheidet. Insbesondere liegt beispielsweise eine Drehzahldifferenz zwischen den Drehzahlen in einem Bereich von einschließlich 10 Umdrehungen pro Minute bis einschließlich 100 Umdrehungen pro Minute, insbesondere in einem Bereich zwischen einschließlich 10 Umdrehungen pro Minute und einschließlich 20 Umdrehungen pro Minute, sodass beispielsweise der Mikroschlupf in einem Bereich von einschließlich 10 Umdrehungen pro Minute bis einschließlich 100 Umdrehungen pro Minute, insbesondere in einem Bereich von einschließlich 10 Umdrehungen pro Minute bis einschließlich 50 Umdrehungen pro Minute und besonders vorzugsweise in einem Bereich von einschließlich 10 Umdrehungen pro Minute bis einschließlich 20 Umdrehungen pro Minute, liegt.

Um nun einerseits einen besonders hohen Fahrkomfort und andererseits einen besonders effizienten und somit energie- beziehungsweise kraftstoffverbrauchsarmen Betrieb realisieren zu können, ist es erfindungsgemäß vorgesehen, dass mittels der auch als Steuergerät bezeichneten elektronischen Recheneinrichtung eine Überanpressung der Kupplung gezielt eingestellt wird, wodurch die Kupplung während zumindest einer von der wenigstens einen Betriebsphase unterschiedlichen zweiten Betriebsphase schlupffrei betrieben wird. Die wenigstens eine Betriebsphase, während welcher die Kupplung mit dem Mikroschlupf betrieben wird, wird auch als erste Betriebsphase bezeichnet. Außerdem ist unter dem jeweiligen gezielten Einstellen des Mikroschlupfes beziehungsweise der Überanpressung zu verstehen, dass der Mikroschlupf beziehungsweise die Überanpressung mittels der elektronischen Recheneinrichtung gewünscht beziehungsweise bewusst eingestellt wird, sodass es sich bei dem Schlupf beziehungsweise bei der Überanpressung nicht um zufällig und beispielsweise aufgrund von Toleranzen auftretende Ereignisse handelt. Zum gezielten Einstellen des Mikroschlupfes beziehungsweise der Überanpressung wird beispielsweise mittels der elektronischen Recheneinrichtung die Kupplung, insbesondere wenigstens ein Stellglied der Kupplung, angesteuert, indem beispielsweise wenigstens ein, insbesondere elektrisches, Ansteuersignal von der elektronischen Recheneinrichtung an das Stellglied übertragen und von dem Stellglied empfangen wird.

Die Erfindung basiert insbesondere auf folgender Erkenntnis: Üblicherweise wird bei herkömmlichen Antriebssträngen, insbesondere bei herkömmlichen, beispielsweise als Doppelkupplungsgetriebe ausgebildeten Getrieben, während einer Fahrt ein Mikroschlupf der Kupplung eingestellt. Diese Kupplung, welche mit dem Mikroschlupf betrieben wird, ist beispielsweise bei einem Doppelkupplungsgetriebe die sogenannte aktive Kupplung, welche zu einem Teilgetriebe des Doppelkupplungsgetriebes und insbesondere zu einem eingelegten Gang des Teilgetriebes gehört. Dabei umfasst der Antriebsstrang üblicherweise einen auch als Antriebsmaschine bezeichneten Antriebsmotor, welcher Drehmomente zum Antreiben des Kraftfahrzeugs bereitstellt. Insbesondere stellt der Antriebsmotor die Drehmomente über eine beispielsweise als Kurbelwelle ausgebildete Abtriebswelle bereit. Der Antriebsmotor, welcher beispielsweise als Verbrennungskraftmaschine oder aber als Elektromotor ausgebildet ist, insbesondere die Abtriebswelle, ist beispielsweise, insbesondere drehfest, mit einer Eingangs- oder Antriebsseite der Kupplung beziehungsweise mit dem einem auf der Antriebsseite angeordneten ersten Bauelement der Kupplung, insbesondere drehfest, gekoppelt, sodass die von dem Antriebsmotor bereitgestellten Drehmomente auf der Eingangs- beziehungsweise Antriebsseite in die Kupplung eingeleitet werden.

Die von dem Antriebsmotor bereitgestellten Drehmomente werden zumindest teilweise über die Kupplung auf eine Ausgangs- beziehungsweise Abtriebsseite der Kupplung beziehungsweise auf das auf der Ausgangsseite angeordnete zweite Bauelement übertragen, wobei beispielsweise die Ausgangsseite beziehungsweise das zweite Bauelement, insbesondere drehfest, mit einer weiteren Welle gekoppelt ist, sodass die beispielsweise als Getriebeeingangswelle eines Getriebes ausgebildete weitere Welle über die Kupplung von dem Antriebsmotor, insbesondere von der Abtriebswelle, antreibbar ist. Insbesondere wird die weitere Welle beziehungsweise die Ausgangsseite der Kupplung in einem Zugbetrieb beziehungsweise in einem Zugfall von dem Antriebsmotor über die Eingangsseite angetrieben, wobei in dem Zugbetrieb beziehungsweise in dem Zugfall des Antriebsmotors dieser - wie zu vor beschrieben - Drehmomente zum Antreiben der weiteren Welle bereitstellt. Das jeweilige Drehmoment wird auch als Antriebsmoment bezeichnet und ist beispielsweise in dem Zugfall größer als 0 Newtonmeter.

Unter dem Mikroschlupf ist dabei zu verstehen, dass sich die Eingangsseite der Kupplung beziehungsweise die Abtriebswelle im Zugfall wenige Umdrehungen schneller dreht als die Abtriebsseite beziehungsweise die weitere Welle. In einem Schubbetrieb beziehungsweise in einem Schubfall dreht sich die Eingangsseite wenige Umdrehungen langsamer als die Ausgangsseite, wobei in dem Schubbetrieb die Abtriebswelle über die Kupplung von der weiteren Welle angetrieben wird.

Hierbei ist beispielsweise das zuvor genannte Antriebsmoment kleiner als 0 Newtonmeter. Dabei liegt beispielsweise eine Drehzahldifferenz zwischen der Eingangsseite und der Ausgangsseite in einem Bereich von einschließlich 10 Umdrehungen pro Minute bis einschließlich 100 Umdrehungen pro Minute, insbesondere in einem Bereich von einschließlich 10 Umdrehungen pro Minute bis einschließlich 50 Umdrehungen pro Minute und vorzugsweise in einem Bereich von einschließlich 10 Umdrehungen pro Minute bis einschließlich 20 Umdrehungen pro Minute. Dieses gezielte Einstellen des Mikroschlupfes dient einerseits dazu, eine gewisse Entkopplung in dem auch als Triebstrang bezeichneten Antriebsstrang darzustellen, um beispielsweise Drehungleichförmigkeiten des Antriebsmotors abzumildern beziehungsweise zu dämpfen. Andererseits dient die gezielte Einstellung des Mikroschlupfes dazu, um beispielsweise das Antriebsmoment an der Kupplung exakt einzustellen. Hierunter ist insbesondere zu verstehen, dass beispielsweise ein Kupplungsmoment der Kupplung eingestellt wird. Dieses Kupplungsmoment ist das von der beziehungsweise über die Kupplung beispielsweise von der Abtriebswelle auf die weitere Welle beziehungsweise umgekehrt übertragbare Drehmoment. Unter dem zuvor genannten exakten Einstellen des Antriebsmoments an der Kupplung ist beispielsweise zu verstehen, dass das Kupplungsmoment derart eingestellt wird, dass das Kupplungsmoment dem von dem Antriebsmotor bereitgestellten Antriebsmoment entspricht.

Im Falle der Überanpressung wird die Kupplung schlupffrei, das heißt mit einem Schlupfwert von 0 Umdrehungen pro Minute betrieben, sodass sich beispielsweise die Abtriebswelle und die weitere Welle mit derselben Drehzahl drehen. Im Falle der Überanpressung und damit im Falle eines Schlupfwerts von 0 Umdrehungen pro Minute kann das dem auch als Motormoment bezeichnete Antriebsmoment zugehörige Kupplungsmoment nicht eingestellt werden. Mit anderen Worten kann im Falle der Überanpressung das Kupplungsmoment nicht oder nicht ohne weiteres derart eingestellt werden, dass das Kupplungsmoment dem Antriebsmoment entspricht, was beispielsweise gut in der DE 101 50 597 A1 beschrieben ist. Das exakte Einstellen des Antriebsmoments an der Kupplung ist jedoch vorteilhaft und wünschenswert, um beispielsweise bei einem Durchführen beziehungsweise Einleiten einer Schaltung des Getriebes des Antriebsstrangs und somit bei einer zugehörigen Momentenüberschneidung ein vorteilhaftes Kupplungsmoment, insbesondere als Summenmoment, einzustellen, um dadurch die beispielsweise als Hochschaltung ausgebildete Schaltung besonders komfortabel durchführen zu können. Ist die Kupplung beispielsweise vor und/oder während der Schaltung derart geschlossen, dass Überanpressung der Kupplung und somit ein Schlupfwert von 0 Umdrehungen pro Minute vorliegen, so kommt es, insbesondere bei der Schaltung, zu einer sogenannten Verspannung während der zuvor genannten Momentenüberschneidung. Diese Verspannung wird von Insassen des Kraftfahrzeugs als Verzögerung wahrgenommen, was den Fahrkomfort beeinträchtigt. Diese Beeinträchtigung des Fahrkomforts kann somit durch Betreiben der Kupplung mit Mikroschlupf vermieden werden.

Der gezielt eingestellte Mikroschlupf hat jedoch den Nachteil, dass dadurch Schlupfverluste erzeugt werden. Bei einem Antriebsmoment von beispielsweise 200 Newtonmetern und einem eingestellten Mikroschlupf von beispielsweise 15 Umdrehungen pro Minute werden circa 314 Watt Schlupfleistung erzeugt. Die Schlupfverluste resultieren nicht nur daraus, dass Leistung in der Kupplung durch Reibung in Wärme umgewandelt wird, sondern es wird darüber hinaus weitere Energie benötigt, um zugeführte Leistung und damit erzeugte Wärme abzuführen.

Das erfindungsgemäße Verfahren ermöglicht es nun, sowohl eine Beeinträchtigung des Fahrkomforts als auch übermäßige Schlupfverluste zu vermeiden, sodass sowohl ein besonders komfortabler als auch ein besonders effizienter beziehungsweise wirkungsgradgünstiger Betrieb realisierbar sind. Durch gezieltes Einstellen der Überanpressung, sodass der Schlupf zwischen der An- und Abtriebsseite der Kupplung 0 Umdrehungen pro Minute beträgt, können die Schlupfverluste insbesondere beim Fahren in oder auf einem konstanten Gang minimiert werden. Um auch beispielsweise im Falle einer eingeleiteten und beispielsweise als Hoch- oder Rückschaltung ausgebildeten Schaltung den exakten Momentenpunkt, das heißt ein zur Realisierung einer besonders komfortablen Schaltung vorteilhaftes Kupplungsmoment zu kennen und diesen beziehungsweise dieses, beispielsweise mittels Momentensprung, einer Rampe oder einer Parabel einstellen zu können, wird die erste Betriebsphase durchgeführt beziehungsweise eingestellt, während welcher die Kupplung mit Mikroschlupf betrieben wird. In der zweiten Betriebsphase jedoch werden Schlupfverluste vermieden, da die Kupplung schlupffrei betrieben wird.

Zur Realisierung eines besonders komfortablen sowie effizienten Betriebs ist es gemäß der Erfindung vorgesehen, dass der Mikroschlupf, während der ersten Betriebsphase, mittels eines Reglers der elektronischen Recheneinrichtung geregelt wird. Mit anderen Worten wird der Mikroschlupf mittels der elektronischen Recheneinrichtung geregelt eingestellt und gehalten, insbesondere auf wenigstens einem Soll-Wert.

Zur Realisierung eines besonders komfortablen und effizienten Betriebs hat es sich als weiterhin erfindungsgemäß gezeigt, wenn in der ersten Betriebsphase wenigstens ein Regelparameter zum Regeln des Mikroschlupfes ermittelt wird. Der Regelparameter wird auch als Regelanteil oder Regleranteil bezeichnet. Dabei schließt sich zeitlich an die erste Betriebsphase die zweite Betriebsphase an, sodass beispielsweise die Kupplung zunächst mit Mikroschlupf und daran anschließend mit Überanpressung betrieben wird. An die zweite Betriebsphase anschließend wird mittels der elektronischen Recheneinrichtung ein weiterer Mikroschlupf der Kupplung gezielt eingestellt, wodurch die Kupplung während einer sich an die zweite Betriebsphase zeitlich anschließenden dritten Betriebsphase mit dem weiteren Mikroschlupf betrieben wird.

Dabei ist es denkbar, dass der weitere Mikroschlupf beziehungsweise dessen erster Wert dem ersten Mikroschlupf beziehungsweise dessen zweiten Wert entspricht oder aber die Werte können voneinander unterschiedlich sein. Dabei ist es vorgesehen, dass während der dritten Betriebsphase der in der ersten Betriebsphase ermittelte und beispielsweise in einer Speichereinrichtung der elektronischen Recheneinrichtung gespeicherte Regelparameter zum Regeln des Mikroschlupfes verwendet wird.

Die erste Betriebsphase ist somit erfindungsgemäß eine Prüfphase, welche beispielsweise zwischen Betriebsphasen, während welchen die Kupplung mit Überanpressung betrieben wird, durchgeführt wird. Insbesondere ist es dabei denkbar, zwischen zwei aufeinanderfolgenden Betriebsphasen, während welchen die Kupplung mit Überanpressung betrieben wird, eine oder mehrere Prüfphasen durchzuführen und somit zu implementieren. Während beziehungsweise innerhalb der jeweiligen Prüfphase wird beziehungsweise werden durch das gezielte Einstellen des jeweiligen Mikroschlupfes als Soll-Schlupf wenigstens ein Regelparameter beziehungsweise mehrere Regelparameter ermittelt, wobei der beziehungsweise die Regelparameter beispielsweise gespeichert werden. Da beispielsweise der Mikroschlupf während der entsprechenden Betriebsphase beziehungsweise Prüfphase geregelt wird, wird, insbesondere mittels der elektronischen Recheneinrichtung, wird eine Mikroschlupfregelung, insbesondere während der ersten Betriebsphase beziehungsweise während der jeweiligen Prüfphase, durchgeführt. Dies bedeutet, dass während der jeweiligen Prüfphase eine Mikroschlupfregelung durchgeführt wird, während welcher der wenigstens eine beziehungsweise die Regelparameter ermittelt wird beziehungsweise werden.

Wird beispielsweise die zweite Betriebsphase beziehungsweise die Überanpressung verlassen, so wird der zuvor ermittelte und beispielsweise abgespeicherte Regelparameter beziehungsweise so werden die zuvor ermittelten und beispielsweise abgespeicherten Regelparameter genutzt, um die Kupplung nach ihrem Betrieb mit Überanpressung mit Mikroschlupf zu betreiben und dabei den Mikroschlupf auf Basis des Regelparameters beziehungsweise auf Basis der Regelparameter einzuregeln. Hierzu wird beispielsweise der ermittelte Regelparameter selbst verwendet, gegebenenfalls unter Berücksichtigung beziehungsweise in Kombination mit einem auch als Offset-Wert bezeichneten Korrekturwert, um den beispielsweise der zuvor ermittelte Regelparameter korrigiert wird.

Dabei hat es sich als besonders vorteilhaft gezeigt, wenn in der sich an die zweite Betriebsphase anschließenden dritten Betriebsphase, in welcher der ermittelte Regelparameter zum Regeln des Mikroschlupfes verwendet wird, eine Schaltung eines Getriebes des Antriebsstrangs durchgeführt wird. Wie zuvor beschrieben kann durch Beenden beziehungsweise Verlassen der Überanpressung und durch Verwenden des zuvor ermittelten Regelparameters zum Einstellen beziehungsweise Regeln des Mikroschlupfes eine besonders komfortable Schaltung durchgeführt werden, ohne dass es zu von Insassen des Kraftfahrzeugs spürbaren Komforteinbußen kommt.

Um dabei den Energieverbrauch, insbesondere den Kraftstoffverbrauch, besonders gering zu halten, ist es in weiterer Ausgestaltung der Erfindung vorgesehen, dass die Kupplung während Zeitphasen, die außerhalb von Schaltphasen, während welchen wenigstens eine Schaltung des Getriebes durchgeführt wird, liegen, mit der Überanpressung betrieben wird. Hierdurch können Schlupfverluste vermieden werden, wodurch sich ein besonders wirkungsgradgünstiger Betrieb darstellen lässt. Außerdem können Komforteinbußen vermieden werden, da der Betrieb mit Überanpressung nicht zu Komfortbeeinträchtigungen führt.

Eine weitere Ausführungsform zeichnet sich dadurch aus, dass die Kupplung während Konstantfahrten des Fahrzeugs mit der Überanpressung betrieben wird. Während einer solchen Konstantfahrt wird das Fahrzeug mit einer zumindest im Wesentlichen konstanten Geschwindigkeit gefahren. Da hierbei die Kupplung schlupffrei betrieben wird, können übermäßige Schlupfverluste vermieden werden, sodass sich ein besonders wirkungsgradgünstiger Betrieb realisieren lässt.

Als besonders vorteilhaft hat es sich gezeigt, wenn die zweite Betriebsphase, insbesondere die Prüfphase, eingestellt wird, wenn sich wenigstens ein, insbesondere vorgebbarer beziehungsweise definierter oder definierbarer, Parameter ändert. Dadurch kann beispielsweise der Regelparameter an den geänderten beziehungsweise sich ändernden Parameter angepasst werden, sodass beispielsweise ein Betrieb der Kupplung mit Mikroschlupf beziehungsweise eine Schaltung des Getriebes, der beziehungsweise die sich an eine Prüfphase und einen sich an die Prüfphase anschließenden Betrieb mit Überanpressung anschließt, besonders vorteilhaft und insbesondere komfortabel durchgeführt werden.

Dabei hat es sich als besonders vorteilhaft gezeigt, wenn der Parameter eine Drehzahl des Antriebsmotors, insbesondere der Abtriebswelle, und/oder das von dem Antriebsmotor bereitgestellte Drehmoment und/oder eine Beschleunigung des Kraftfahrzeugs umfasst. Alternativ oder zusätzlich ist es vorteilhaft, wenn die zweite Betriebsphase jeweils nach Ablauf einer vorgebbaren Zeitspanne eingestellt oder beendet beziehungsweise verlassen wird. Durch diese bedingte Durchführung der Prüfphase kann der Regelparameter stets aktuell beziehungsweise auf einem vorteilhaften Wert gehalten werden, sodass sich ein einerseits komfortabler und andererseits besonders effizienter Betrieb realisieren lässt. Mit anderen Worten ist es vorzugsweise vorgesehen, dass die Prüfphasen unter Berücksichtigung sich ändernder Parameter und Randbedingungen wie beispielsweise Motordrehzahl, Motormoment und/oder Fahrzeugbeschleunigung, insbesondere seit der letzten Prüfphase, und/oder beispielsweise in Abhängigkeit von einer zeitlichen Steuerung durchgeführt und insbesondere beliebig oft wiederholt werden. Alternativ oder zusätzlich ist es denkbar, dass die Überanpressung beziehungsweise der Betrieb mit Überanpressung in Abhängigkeit von dem genannten Parameter abgebrochen wird, wobei beispielsweise bei beziehungsweise nach Abbruch der Überanpressung die Kupplung mit Mikroschlupf betrieben wird.

Insgesamt ist es mittels des erfindungsgemäßen Verfahrens möglich, Zeitanteile an einer gesamten Betriebsdauer des Kraftfahrzeugs, welches in den genannten Zeitanteilen mit Mikroschlupf der Kupplung betrieben wird, besonders gering zu halten, sodass der Energie- beziehungsweise Kraftstoffverbrauch des Kraftfahrzeugs besonders gering gehalten werden kann. Durch die Prüfphasen und das Ermitteln sowie beispielsweise Abspeichern des Regleranteils kann zudem eine analoge Schaltqualität im Vergleich zur konventionellen Mikroschlupfregelung gewährleistet werden, sodass ein besonders hoher Fahrkomfort darstellbar ist. Das erfindungsgemäße Verfahren ist somit eine Funktion zur situativen Substitution der Mikroschlupfregelung durch die beschriebene Überanpressung, um dadurch im Vergleich zu herkömmlichen Antriebssträngen beziehungsweise Getrieben eine Effizienzsteigerung, insbesondere in Doppel-Kupplungsgetrieben, zu realisieren, insbesondere unter Berücksichtigung von physikalischen und fahrsituativen Randbedingungen.

Ein zweiter Aspekt der Erfindung betrifft ein Kraftfahrzeug, insbesondere einen Kraftwagen wie beispielsweise einen Personenkraftwagen. Das Kraftfahrzeug weist einen zum Antreiben des Kraftfahrzeugs ausgebildeten Antriebsstrang auf, welcher wenigstens eine Kupplung und eine elektronische Recheneinrichtung umfasst. Die elektronische Recheneinrichtung ist dabei dazu ausgebildet, wenigstens einen Mikroschlupf der Kupplung gezielt einzustellen, um dadurch die Kupplung während wenigstens einer Betriebsphase mit dem Mikroschlupf zu betreiben.

Um nun einen besonders effizienten Betrieb sowie einen besonders hohen Fahrkomfort realisieren zu können, ist die elektronische Recheneinrichtung erfindungsgemäß dazu ausgebildet, eine Überanpressung der Kupplung gezielt einzustellen, um die Kupplung während zumindest einer von der wenigstens einen Betriebsphase unterschiedlichen zweiten Betriebsphase schlupffrei zu betreiben. Somit ist das erfindungsgemäße Kraftfahrzeug zum Durchführen eines erfindungsgemäßen Verfahrens ausgebildet. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: Diagramme zum Veranschaulichen eines erfindungsgemäßen Verfahrens zum Betreiben einer Kupplung eines Antriebsstrangs für ein Kraftfahrzeug, bei welchem die Kupplung zeitweise mit Mikroschlupf und zeitweise mit Überanpressung betrieben wird; und
- Fig. 2: eine schematische Darstellung des Antriebsstrangs.

In den Fig. sind gleiche oder funktionsgleiche Elemente mit gleichen Bezugszeichen versehen.

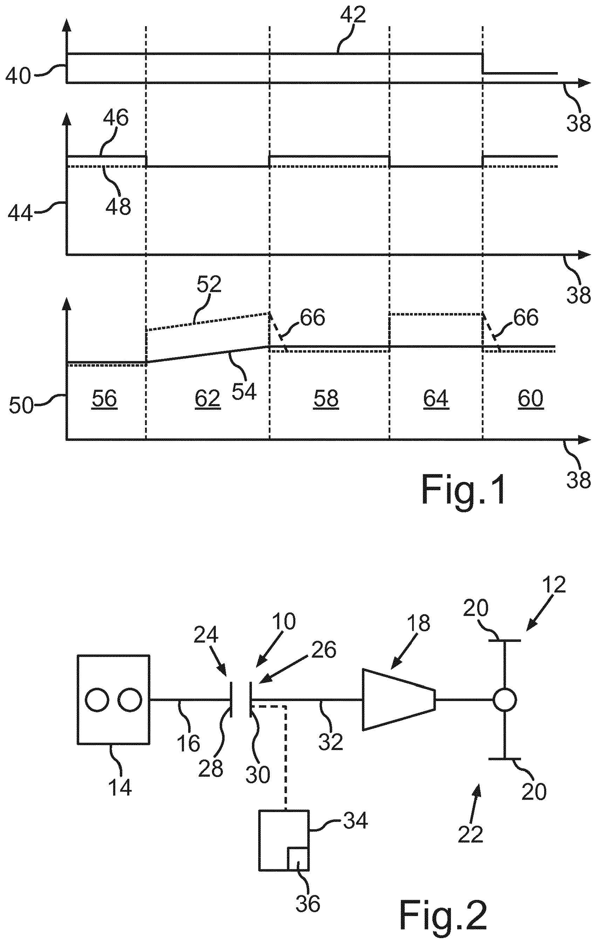

Fig. 1 zeigt Diagramme, anhand derer im Folgenden ein Verfahren zum Betreiben einer in Fig. 2 schematisch dargestellten und als Reibkupplung 10 ausgebildeten Kupplung eines Antriebsstrangs 12 erläutert wird. Der Antriebsstrang 12 ist Bestandteil eines Kraftfahrzeugs, welches beispielsweise als Kraftwagen, insbesondere als Personenkraftwagen, ausgebildet und mittels des Antriebsstrangs 12 antreibbar ist. Hierzu umfasst der Antriebsstrang 12 einen Antriebsmotor 14, welcher beispielsweise als Verbrennungskraftmaschine, insbesondere als Hubkolben-Verbrennungsmaschine, ausgebildet ist. Dabei weist der Antriebsmotor 14 eine beispielsweise als Kurbelwelle ausgebildete Abtriebswelle 16 auf, über welche der Antriebsmotor 14 jeweilige Drehmomente zum Antreiben des Kraftfahrzeugs bereitstellen kann. Das jeweilige, von dem Antriebsmotor 14 über die Abtriebswelle 16 bereitgestellte Drehmoment wird auch als Motormoment oder Antriebsmoment bezeichnet.

Außerdem umfasst der Antriebsstrang 10 wenigstens ein Getriebe 18, über welches das Kraftfahrzeug, insbesondere Räder 20 einer Achse 22 des Antriebsstrangs 12, von dem Antriebsmotor 14, insbesondere von der Abtriebswelle 16, antreibbar sind. Beispielsweise ist das Getriebe 18 als Doppelkupplungsgetriebe ausgebildet. Das Getriebe 18 umfasst dabei beispielsweise die Reibkupplung 10, welche einfach auch als Kupplung bezeichnet wird. Insbesondere ist es denkbar, dass das Getriebe 18, insbesondere dann, wenn das Getriebe 18 als Doppelkupplungsgetriebe ausgebildet ist, zwei Kupplungen aufweist, denen jeweilige Teilgetriebe zugeordnet sind. Dabei ist die Kupplung 10 eine der Kupplungen des Doppelkupplungsgetriebes, wobei die vorigen und folgenden Ausführungen zur Kupplung 10 ohne weiteres auch auf die in den Fig. nicht dargestellte andere, gegebenenfalls vorgesehene Kupplung des Doppelkupplungsgetriebes übertragen werden können und umgekehrt.

Aus Fig. 2 ist erkennbar, dass die Reibkupplung 10 (Kupplung) eine Eingangsseite 24 und eine Ausgangsseite 26 aufweist, wobei die Eingangsseite 24 auch als Antriebsseite bezeichnet wird. Die Ausgangsseite 26 wird auch als Abtriebsseite bezeichnet. Beispielsweise ist die Ausgangsseite 26 von der Eingangsseite 24 antreibbar beziehungsweise umgekehrt. Auf der Eingangsseite 24 ist wenigstens ein erstes Bauelement 28 der Kupplung angeordnet, wobei auf der Ausgangsseite 26 wenigstens ein zweites Bauelement 30 der Kupplung angeordnet ist. Dabei sind zwischen der Eingangsseite 24 und der Ausgangsseite 26 beziehungsweise zwischen den Bauelementen 28 und 30 jeweilige Drehmomente übertragbar. Die Eingangsseite 24 beziehungsweise das Bauelement 28 ist beispielsweise, insbesondere drehfest, mit der Abtriebswelle 16 gekoppelt, sodass die Eingangsseite 24 beziehungsweise das Bauelement 28 von der Abtriebswelle 16 antreibbar ist beziehungsweise umgekehrt. Ferner ist die Ausgangsseite 26 beziehungsweise das Bauelement 30, insbesondere drehfest, mit einer weiteren Welle 32 des Antriebsstrangs 12 gekoppelt, sodass beispielsweise die weitere Welle 32 von der Ausgangsseite 26 beziehungsweise von dem Bauelement 30 antreibbar ist beziehungsweise umgekehrt. Die weitere Welle 32 ist beispielsweise eine Getriebeeingangswelle des Getriebes 18, in das über die Getriebeeingangswelle die von dem Antriebsmotor 14 bereitgestellten Drehmomente eingeleitet werden können. Insgesamt ist erkennbar, dass zwischen der Abtriebswelle 16 und der weiteren Welle 32 über die Reibkupplung 10 Drehmomente übertragen werden können.

Der Antriebsstrang 12 umfasst ferner eine elektronische Recheneinrichtung 34, welche auch als Steuergerät bezeichnet wird. Dabei ist die Reibkupplung 10 mittels der elektronischen Recheneinrichtung 34 betreibbar. Hierzu steuert die elektronische Recheneinrichtung 34 die Reibkupplung 10, insbesondere wenigstens einen in den Fig. nicht dargestellten Aktor der Reibkupplung 10, an, wodurch beispielsweise die Reibkupplung 10 beziehungsweise der Aktor, welcher auch als Stellglied bezeichnet wird, mittels der elektronischen Recheneinrichtung 34 angesteuert und dabei gesteuert oder vorzugsweise geregelt wird. Zum Ansteuern, das heißt zum Steuern oder Regeln, der Reibkupplung 10, insbesondere des Stellglieds, stellt die elektronische Recheneinrichtung 34 beispielsweise wenigstens ein, insbesondere elektrisches, Signal bereit, welches auch als Ansteuersignal bezeichnet wird. Das Ansteuersignal wird beispielsweise von der elektronischen Recheneinrichtung 34 zu der Reibkupplung 10, insbesondere zu dem Stellglied, übertragen und von der Reibkupplung 10, insbesondere von dem Stellglied, empfangen. Insbesondere weist die elektronische Recheneinrichtung 34 beispielsweise einen Regler 36 auf, mittels welchem die Reibkupplung 10, insbesondere das Stellglied, geregelt, das heißt geregelt betrieben werden kann.

Insbesondere ist es im Rahmen der Ansteuerung beziehungsweise des Betreibens der Reibkupplung 10 vorgesehen, dass mittels der elektronischen Recheneinrichtung 34 ein Kupplungsmoment der Reibkupplung 10 eingestellt wird. Dieses Kupplungsmoment ist beispielsweise das Drehmoment, welches von der beziehungsweise über die Reibkupplung 10, insbesondere von der Abtriebswelle 16, auf die weitere Welle 32 beziehungsweise umgekehrt übertragen werden kann. Auf der jeweiligen Abszisse 38 des jeweiligen Diagramms ist die Zeit aufgetragen, wobei auf die Ordinate 40 beispielsweise Gänge, insbesondere Soll-Gänge, des Getriebes 18 aufgetragen sind. Somit veranschaulicht ein Verlauf 42 eine Schaltung des Getriebes 18. Im Rahmen einer solchen Schaltung erfolgt ein Gangwechsel, bei welchem beispielsweise ein Gang ausgelegt und ein anderer Gang des Getriebes 18 eingelegt wird. Bei dem in den Fig. veranschaulichten Ausführungsbeispiel wird beispielsweise im Rahmen des Gangwechsels von dem fünften Gang in den sechsten Gang gewechselt, sodass es sich bei der zuvor genannten Schaltung um eine Hochschaltung handelt. Die vorigen und folgenden Ausführungen können jedoch ohne weiteres auf eine Rückschaltung übertragen werden und umgekehrt.

Auf der Ordinate 44 ist eine Drehzahl aufgetragen, wobei ein Verlauf 46 die Drehzahl der Abtriebswelle 16 und somit der Eingangsseite 24 beziehungsweise des Bauelements 28 veranschaulicht. Ein Verlauf 48 veranschaulicht die Drehzahl der weiteren Welle 32 und somit der Ausgangswelle 26 beziehungsweise des Bauelements 30. Auf der Ordinate 50 ist ein Drehmoment aufgetragen, wobei ein Verlauf 52 das genannte Kupplungsmoment veranschaulicht. Ferner veranschaulicht ein Verlauf 54 das von dem Antriebsmotor 14 über die Abtriebswelle 16 bereitgestellte Motormoment. Dabei veranschaulichen die Fig. einen Zugfall beziehungsweise einen Zugbetrieb des Antriebsmotors 14. In diesem Zugbetrieb stellt der Antriebsmotor 14 über die Abtriebswelle 16 Drehmomente bereit, sodass in dem Zugbetrieb die weitere Welle 32 über die Reibkupplung 10 von der Abtriebswelle 16 angetrieben wird. Die vorigen und folgenden Ausführungen sind auch auf einen Schubbetrieb beziehungsweise auf einen Schubfall des Antriebsmotors 14 übertragbar. In dem Schubbetrieb wird beispielsweise die Abtriebswelle 16 über die Reibkupplung 10 von der weiteren Welle 32 angetrieben.

Im Rahmen des Verfahrens ist es vorgesehen, dass mittels der elektronischen Recheneinrichtung, insbesondere durch Ansteuern des Stellglieds, wenigstens ein Mikroschlupf der Reibkupplung 10 gezielt eingestellt wird, wodurch die Reibkupplung während Betriebsphasen 56, 58 und 60 gezielt mit dem jeweils eingestellten Mikroschlupf betrieben wird. Unter dem Mikroschlupf ist ein geringfügiger Schlupf zu verstehen, sodass infolge des Einstellens des Mikroschlupfes sich die Eingangsseite 24 und die Ausgangsseite 26 beziehungsweise die Abtriebswelle 16 und die weitere Welle 32 mit voneinander unterschiedlichen Drehzahlen drehen. Im Zugbetrieb weist die Abtriebswelle 16 beispielsweise eine erste Drehzahl auf, während die weitere Welle 32 eine gegenüber der ersten Drehzahl geringere zweite Drehzahl aufweist. Im Schubbetrieb jedoch ist die erste Drehzahl geringer als die zweite Drehzahl. Dabei beträgt eine Drehzahldifferenz zwischen den Drehzahlen beziehungsweise zwischen der Abtriebswelle 16 und der weiteren Welle 32 vorzugsweise höchstens 100 Umdrehungen pro Minute, insbesondere höchstens 50 Umdrehungen pro Minute und vorzugsweise höchstens 20 Umdrehungen pro Minute, wobei die Drehzahldifferenz größer als 0 ist und vorzugsweise mindestens 5 Umdrehungen pro Minute beträgt. Mit anderen Worten liegt der Mikroschlupf beispielsweise in einem Bereich von einschließlich 5 Umdrehungen pro Minute bis einschließlich 100 Umdrehungen pro Minute, insbesondere in einem Bereich von einschließlich 5 Umdrehungen pro Minute bis einschließlich 50 Umdrehungen pro Minute und vorzugsweise in einem Bereich von einschließlich 5 Umdrehungen pro Minute bis einschließlich 20 Umdrehungen pro Minute. Die Betriebsphasen 56 und 58 sind beispielsweise erste Betriebsphasen.

Vorzugsweise wird der Mikroschlupf während der jeweiligen Betriebsphase 56, 58, 60 mittels des Reglers 36 geregelt, das heißt geregelt eingestellt und gehalten, insbesondere auf einem Soll-Wert. Dabei ist es denkbar, dass die jeweiligen, während der Betriebsphasen 56, 58 und 60 eingestellten Mikroschlüpfe gleich sind oder sich voneinander unterscheiden. Während der jeweiligen Betriebsphase 56, 58, 60 wird somit beispielsweise eine Mikroschlupfregelung mittels der elektronischen Recheneinrichtung 34 durchgeführt, insbesondere indem das Stellglied von dem Steuergerät angesteuert wird.

Um dabei einen besonders effizienten und somit wirkungsgradgünstigen Betrieb des Antriebsstrangs 12 zu realisieren, ist es bei dem Verfahren ferner vorgesehen, dass mittels der elektronischen Recheneinrichtung 34, insbesondere durch Ansteuern des Stellglieds, zumindest eine Überanpressung der Reibkupplung 10 gezielt eingestellt wird, wodurch die Reibkupplung 10 während von den Betriebsphasen 56, 58 und 60 unterschiedlichen Betriebsphasen 62 und 64, welche auch als zweite Betriebsphasen bezeichnet werden, gezielt schlupffrei betrieben wird. Unter dem schlupffreien Betrieb der Reibkupplung 10 ist zu verstehen, dass ein solch hohes Kupplungsmoment der Reibkupplung 10 eingestellt wird, dass kein Schlupf zwischen der Eingangsseite 24 und der Ausgangsseite 26 vorliegt. Infolge des schlupffreien Betriebs beziehungsweise während des schlupffreien Betriebs kommt es somit nicht zu einem Schlupf zwischen der Eingangsseite 24 und der Ausgangsseite 26, sodass sich die Abtriebswelle 16 und die weitere Welle 32 mit derselben Drehzahl drehen. Somit sind die Betriebsphasen 56, 58 und 60 Betriebsphasen, während welchen die Reibkupplung 10 mit Mikroschlupf betrieben wird. Ferner sind die Betriebsphasen 62 und 64 Betriebsphasen, während welchen die Reibkupplung 10 mit Überanpressung betrieben wird.

Die Betriebsphase 60 ist beispielsweise eine dritte Betriebsphase, welche sich zeitlich an die zweite Betriebsphase 64 anschließt. Dabei wird - wie aus Fig. 1 erkennbar ist - die zuvor beschriebene und durch den Verlauf 42 veranschaulichte Schaltung des Getriebes 18 in der dritten Betriebsphase 60 durchgeführt. Da während der dritten Betriebsphase 60 die Reibkupplung 10 mit Mikroschlupf betrieben wird, kann die Schaltung besonders komfortabel durchgeführt werden, sodass ein besonders hoher Fahrkomfort für sich im Innenraum des Kraftfahrzeugs aufhaltende Insassen gewährleistet werden kann.

Dabei ist es insbesondere vorgesehen, dass die jeweilige erste Betriebsphase 56 beziehungsweise 58 als Prüfphase durchgeführt wird. Während beziehungsweise in der jeweiligen Prüfphase wird wenigstens ein Regelparameter zum Regeln des jeweiligen Mikroschlupfes ermittelt, sodass der Regler 36 den ermittelten Regelparameter nutzen kann, um den Mikroschlupf zu regeln, das heißt geregelt einzustellen und zu halten. Somit ist es vorzugsweise vorgesehen, dass während der dritten Betriebsphase 60 der in zumindest einer der Prüfphasen, das heißt in der Betriebsphase 62 und/oder in der Betriebsphase 64, ermittelte Regelparameter zum Regeln des Mikroschlupfes von dem Regler 36 verwendet wird. Mit anderen Worten nutzt der Regler 36 während der dritten Betriebsphase 60 den zuvor in der jeweiligen Prüfphase ermittelten Regelparameter, um während der dritten Betriebsphase 60 den Mikroschlupf in Abhängigkeit von dem zuvor ermittelten Regelparameter zu regeln. Hierdurch ist es möglich, die Reibkupplung 10 in den Betriebsphasen 62 und 64 mit Überanpressung und somit wirkungsgradgünstig zu betreiben. Ferner kann die Schaltung im Rahmen der dritten Betriebsphase 60 besonders komfortabel durchgeführt werden. Das Verfahren wird insbesondere während einer Konstantfahrphase, insbesondere in einem festen Gang, durchgeführt. Im Folgenden wird das Verfahren nochmals anhand einer Konstantfahrphase in einem festen Gang unter Berücksichtigung der Prüfphasen und Phasen der Überanpressung erläutert. Hintergrund dabei ist, dass, um die Reibleistung besonders gering zu halten, in Phasen außerhalb von Schaltungen und sonstigen Sonderzuständen, das heißt während des Fahrens in einem konstanten Gang, die Überanpressung der Reibkupplung 10 eingestellt wird. Dadurch wird die Kupplung nicht mehr mit Schlupf betrieben, wodurch Verluste, die aus dem Produkt aus eingestelltem Schlupf und übertragenem Kupplungsmoment entstehen, zumindest weitestgehend eliminiert werden können.

Üblicherweise ist beim Fahren in einem konstanten Gang, das heißt außerhalb von Schaltungen oder Sonderzuständen wie zum Beispiel Freilauf beziehungsweise Segeln, vorgesehen, dass stets ein definierter Schlupf in Form eines Mikroschlupfes der Reibkupplung 10 eingestellt ist, wobei der Schlupf je nach Fahrsituation variieren kann. Dies dient einerseits einer Entkopplung zwischen dem Antriebsmotor 14 und dem Getriebe 18, um ein vorteilhaftes Geräuschverhalten zu realisieren, was auch als NVH-Verhalten bezeichnet wird (NVH - Noise Vibration Harshness). Andererseits dient dies dazu, das tatsächliche Motormoment an der Kupplung zu stellen und um die Kupplung nicht in Überanpressung zu betreiben, was bei einem Kupplungswechsel während Schaltungen die Grundlage für einen gewissen Schaltungskomfort darstellt.

Zum Einstellen des Schlupfes beziehungsweise Mikroschlupfes kann beispielsweise ein vorgesteuerter pl-Regler genutzt werden. Dies bedeutet, dass das vom Antriebsmotor 14 bereitgestellte beziehungsweise übermittelte Motormoment unter Berücksichtigung von Trägheitsmomenten vorgesteuert in das Kupplungsmoment eingeht und der nachgelagerte pl-Regler Ungenauigkeiten zwischen dem gemeldeten Motormoment und dem eingestellten Kupplungsmoment ausregelt. Diese Ungenauigkeiten entstehen motorseitig beispielsweise durch Ladungswechseleffekte, die nicht oder nur mit einer entsprechenden Genauigkeit in dem gemeldeten Motormoment abgebildet werden können, andererseits getriebeseitig an der Kupplung durch beispielsweise Reibwerteinflüsse, die ebenfalls nicht mit der notwendigen Genauigkeit in einem Modell abgebildet werden können. Gäbe es weder auf Motor- noch Getriebeseite Ungenauigkeiten zwischen dem abgebildeten und dem tatsächlichen Motormoment, wäre der Regler obsolet und ein rein vorgesteuerter Betrieb wäre ausreichend.

Da es nun vorgesehen ist, in Phasen des Fahrens in einem konstanten Gang, das heißt beispielsweise in den Betriebsphasen 62 und 64, die Kupplung überangepresst, das heißt ohne Schlupf zu betreiben, werden die Prüfphasen zur Ermittlung des wenigstens einen Regelparameters oder zur Ermittlung von mehreren Regelparametern implementiert, wobei der jeweilige Regelparameter auch als Regleranteil bezeichnet wird. Hierbei wird die Überanpressung beispielsweise sprunghaft, mittels einer Rampe 66 beziehungsweise rampenförmig oder mittels einer Parabel beziehungsweise parabelförmig verlassen beziehungsweise beendet und im Anschluss ein geforderter Soll-Schlupf als Mikroschlupf eingestellt. Ist der Mikroschlupf konstant eingeregelt, so werden die dann vorliegenden Regleranteile beispielsweise in einer Speichereinrichtung der elektronischen Recheneinrichtung 34 abgespeichert und es wird wieder in die Überanpressung gewechselt. Dieser Vorgang kann je nach Bedarf beliebig oft wiederholt werden, wenn sich beispielsweise die Drehzahl des Antriebsmotors 14 beziehungsweise der Abtriebswelle 16 und/oder das anliegende Motormoment seit der letzten Prüfphase um einen gewissen Wert geändert hat, insbesondere wenn zu erwarten ist, dass geänderte Randbedingungen wiederum andere Regleranteile erfordern, und/oder auf Basis einer rein zeitlichen Steuerung der Phasen beziehungsweise nach einer gewissen maximalen Zeit der Überanpressung soll in die nächste Prüfphase gewechselt werden.

Konventionelle Systeme ohne Überanpressung zielen unter anderem darauf ab, dass durch das korrekte Einregeln des Mikroschlupfes und das damit verbundene Stellen des korrekten Kupplungsmoments die geforderte Schaltqualität erzielt werden kann. Würde ein zu hohes Kupplungsmoment eingestellt werden, käme es im Zuge von beispielsweise Hoch-Schaltungen zu einem Verspannen während einer Momentenüberschneidung. Würde hingegen ein zu geringes Kupplungsmoment eingestellt werden, käme es zu Motordrehzahl-Abfliegern im Zuge von oder auch außerhalb von Schaltungen.

Würde hingegen nur mit Überanpressung, das heißt ohne Prüfphasen, gefahren werden, bestünde die Gefahr, dass beim Initialisieren von Schaltungen und dem Verlassen der Überanpressung das Kupplungsmoment auf ein falsches Moment initialisiert wird. In der Regel wird bisher beim Verlassen der Überanpressung auf das Motormoment in Addition mit meinem Korrekturwert, der auch als Offset-Wert bezeichnet wird, geregelt, der beispielsweise aus dem Trägheitsmoment und dem Drehzahlgradienten des Antriebsmotors 14 berechnet wird. Zusätzlich kann das Initialisierungsmoment noch mit einem zusätzlichen Korrekturwert (Offset) versehen werden.

Der Vorteil des beschriebenen Verfahrens, welches sowohl Phasen der Überanpressung als auch Phasen des Mikroschlupfes nutzt, liegt insbesondere darin, dass durch die Kombination aus Überanpressung und den implementierten Prüfphasen sowohl eine Effizienzsteigerung als auch eine gleichbleibend gute Schaltqualität erzielt werden können. Das Verfahren kann somit die Hauptvorteile des Betreibens der Reibkupplung 10 mit Überanpressung mit den Vorteilen des Betreibens der Reibkupplung 10 mit Mikroschlupf kombinieren, sodass ein sowohl komfortabler als auch effizienter Betrieb realisierbar ist.

## Patentansprüche

1. Verfahren zum Betreiben einer Kupplung (10) eines die Kupplung (10), einen Antriebsmotor (14) mit einer Abtriebswelle (16) und ein Getriebe (18) mit einer Getriebeeingangswelle (32) aufweisenden Antriebsstrangs (12) für ein Kraftfahrzeug, bei welchem mittels einer elektronischen Recheneinrichtung (34) des Antriebsstrangs (12) wenigstens ein Mikroschlupf der Kupplung (10), über welche Drehmomente zwischen der Abtriebswelle (16) und der Getriebeeingangswelle (32) übertragbar sind, gezielt eingestellt wird, wodurch die Kupplung (10) während wenigstens einer ersten Betriebsphase (56, 58) mit dem Mikroschlupf betrieben wird, wobei mittels der elektronischen Recheneinrichtung (34) eine Überanpressung der Kupplung (10) gezielt eingestellt wird, wodurch die Kupplung (10) während zumindest einer von der wenigstens einen ersten Betriebsphase (56, 58) unterschiedlichen zweiten Betriebsphase (62, 64) schlupffrei betrieben wird, und wobei der Mikroschlupf mittels eines Reglers (36) der elektronischen Recheneinrichtung (34) geregelt wird,
**dadurch gekennzeichnet, dass**
die erste Betriebsphase (56, 58) als eine Prüfphase durchgeführt wird, in welcher eine Schaltung des Getriebes (18) unterbleibt und wenigstens ein Regelparameter zum Regeln des Mikroschlupfes ermittelt wird, wobei sich zeitlich an die Prüfphase die zweite Betriebsphase (62, 64) anschließt, in welcher eine Schaltung des Getriebes (18) unterbleibt, wobei anschließend an die zweite Betriebsphase (62, 64) mittels der elektronischen Recheneinrichtung (34) ein weiterer Mikroschlupf der Kupplung (10) gezielt eingestellt wird, wodurch die Kupplung (10) während einer sich an die zweite Betriebsphase (62, 64) anschließenden dritten Betriebsphase (60) mit dem weiteren Mikroschlupf betrieben wird, wobei während der dritten Betriebsphase (60) der in der Prüfphase ermittelte Regelparameter zum Regeln des Mikroschlupfes verwendet wird, und wobei in der sich an die zweite Betriebsphase (62, 64) anschließenden dritten Betriebsphase (60), in welcher der ermittelte Regelparameter zum Regeln des Mikroschlupfes verwendet wird, eine Schaltung des Getriebes (18) des Antriebsstrangs (12) durchgeführt wird.

2. Verfahren nach Anspruch 1,
**dadurch gekennzeichnet, dass**
die Kupplung (10) während Zeitphasen, die außerhalb von Schaltphasen, während welchen wenigstens eine Schaltung eines Getriebes (18) des Antriebsstrangs (12) durchgeführt wird, liegen, mit der Überanpressung betrieben wird.

3. Verfahren nach einem der vorhergehenden Ansprüche,
**dadurch gekennzeichnet, dass**
die Kupplung (10) während Konstantfahrten des Fahrzeugs mit der Überanpressung betrieben wird.

4. Verfahren nach einem der vorhergehenden Ansprüche,
**dadurch gekennzeichnet, dass**
die Prüfphase eingestellt wird, wenn sich wenigstens ein Parameter ändert.

5. Verfahren nach Anspruch 4,
**dadurch gekennzeichnet, dass**
der Parameter eine Drehzahl eines Antriebsmotors (14) des Antriebsstrangs (12) und/oder ein von dem Antriebsmotor (14) bereitgestelltes Drehmoment und/oder eine Beschleunigung des Kraftfahrzeugs umfasst.

6. Verfahren nach einem der vorhergehenden Ansprüche,
**dadurch gekennzeichnet, dass**
die zweite Betriebsphase (62, 64) jeweils nach Ablauf einer vorgebbaren Zeitspanne eingestellt oder beendet wird.

7. Kraftfahrzeug, mit einem zum Antreiben des Kraftfahrzeugs ausgebildeten Antriebsstrang (12), welcher wenigstens eine Kupplung (10), einen Antriebsmotor (14) mit einer Abtriebswelle (16), ein Getriebe (18) mit einer Getriebeeingangswelle (32) und eine elektronische Recheneinrichtung (34) aufweist, welche dazu ausgebildet ist, wenigstens einen Mikroschlupf der Kupplung (10)), über welche Drehmomente zwischen der Abtriebswelle (16) und der Getriebeeingangswelle (32) übertragbar sind, gezielt einzustellen, um dadurch die Kupplung (10) während wenigstens einer Betriebsphase (56, 58) mit dem Mikroschlupf zu betreiben, wobei die elektronische Recheneinrichtung (34) dazu ausgebildet ist, eine Überanpressung der Kupplung (10) gezielt einzustellen, um die Kupplung (10) während zumindest einer von der wenigstens einen Betriebsphase (56, 58) unterschiedlichen zweiten Betriebsphase (62, 64) schlupffrei zu betreiben, und wobei der Mikroschlupf mittels eines Reglers (36) der elektronischen Recheneinrichtung (34) geregelt wird,
**dadurch gekennzeichnet, dass**
die erste Betriebsphase (56, 58) eine Prüfphase ist, in welcher eine Schaltung des Getriebes (18) unterbleibt und wenigstens ein Regelparameter zum Regeln des Mikroschlupfes ermittelt wird, wobei sich zeitlich an die Prüfphase die zweite Betriebsphase (62, 64) anschließt, in welcher eine Schaltung des Getriebes (18) unterbleibt, wobei anschließend an die zweite Betriebsphase (62, 64) mittels der elektronischen Recheneinrichtung (34) ein weiterer Mikroschlupf der Kupplung (10) gezielt eingestellt wird, wodurch die Kupplung (10) während einer sich an die zweite Betriebsphase (62, 64) anschließenden dritten Betriebsphase (60) mit dem weiteren Mikroschlupf betrieben wird, wobei während der dritten Betriebsphase (60) der in der Prüfphase ermittelte Regelparameter zum Regeln des Mikroschlupfes verwendet wird, und wobei in der sich an die zweite Betriebsphase (62, 64) anschließenden dritten Betriebsphase (60), in welcher der ermittelte Regelparameter zum Regeln des Mikroschlupfes verwendet wird, eine Schaltung des Getriebes (18) des Antriebsstrangs (12) durchgeführt wird.

## Claims

1. Method for operating a coupling (10) of a drive train (12) for a motor vehicle which has the coupling (10), a drive motor (14) with an output drive shaft (16) and a gear (18) with a gear input shaft (32), in which by means of an electronic computing unit (34) of the drive train (12) at least one microslip of the coupling (10) is set specifically, by which torques can be transmitted between the output drive shaft (16) and the gear input shaft (32), whereby the coupling (10) is operated with the microslip during at least a first operating phase (56, 58), wherein by means of the electronic computing unit (34) a overpressure of the coupling (10) is set specifically, whereby the coupling (10) is operated slip-free during at least one second operating phase (62, 64) different from the at least one first operating phase (56, 58), and wherein the microslip is controlled by means of a controller (36) of the electronic computing unit (34),
**characterised in that**
the first operating phase (56, 58) is performed as a test phase in which shifting of the gear (18) does not take place and at least one control parameter is determined for controlling the microslip, wherein the second operating phase (62, 64) follows the test phase in terms of time in which shifting of the gear (18) does not take place, wherein following the second operating phase (62, 64) by means of the electronic computing unit (34) a further microslip of the coupling (10) is specifically set, whereby the coupling (10) is operated during a third operating phase (60) following the second operating phase (62, 64) with the additional microslip, wherein during the third operating phase (60) the control parameter determined in the test phase is used for controlling the microslip, and wherein in the third operating phase (60) following the second operating phase (62, 64), in which third operating phase the determined control parameter is used for controlling the microslip, shifting of the gear (18) of the drive train (12) is performed.

2. Method according to claim 1,
**characterised in that**
the coupling (10) is operated with the overpressure during time phases which are outside shifting phases during which at least shifting of a gear (18) of the drive train (12) is performed.

3. Method according to any of the preceding claims,
**characterised in that**
the coupling (10) is operated with the overpressure during constant travel of the vehicle.

4. Method according to any of the preceding claims,
**characterised in that**
the test phase is adjusted when at least one parameter changes.

5. Method according to claim 4,
**characterised in that**
the parameter comprises a speed of a drive motor (14) of the drive train (12) and/or a torque provided by a drive motor (14) and/or an acceleration of the motor vehicle.

6. Method according to any of the preceding claims,
**characterised in that**
the second operating phase (62, 64) is adjusted or ended respectively after the expiry of a predefinable time period.

7. Motor vehicle, with a drive train (12) designed for driving the motor vehicle, which has at least one coupling (10), a drive motor (14) with an output drive shaft (16), a gear (18) with a gear input shaft (32) and an electronic computing unit (34) which is designed to specifically set at least one microslip of the coupling (10) via which torques can be transmitted between the output drive shaft (16) and the gear input shaft (32), in order in this way to operate the coupling (10) during at least one operating phase (56, 58) with the microslip, wherein the electronic computing unit (34) is designed to specifically set an overpressure of the coupling (10) in order to operate the coupling (10) slip-free during at least one operating phase (62, 64) different from the at least one operating phase (56, 58), and wherein the microslip is controlled by means of a controller (36) of the electronic computing unit (34),
**characterised in that**
the first operating phase (56, 58) is a test phase in which a shifting of the gear (18) does not take place and at least one control parameter is determined for controlling the microslip, wherein the second operating phase (62, 64) follows the test phase in terms of time, in which shifting of the gear (18) does not take place, wherein following the second operating phase (62, 64) by means of the electronic computing unit (34) a further microslip of the coupling (10) is specifically set, whereby the coupling (10) is operated during a third operating phase (60) following the second operating phase (62, 64) with the additional microslip, wherein during the third operating phase (60) the control parameter determined in the test phase is used for controlling the microslip, and wherein in the third operating phase (60) following the second operating phase (62, 64), in which third operating phase the determined control parameter is used for controlling the microslip, a shifting of the gear (18) of the drive train (12) is performed.

## Revendications

1. Procédé de fonctionnement d'un embrayage (10) d'une chaîne cinématique (12) pour un véhicule automobile présentant l'embrayage (10), un moteur d'entrainement (14) avec un arbre de sortie (16) et une transmission (18) avec un arbre d'entrée de transmission (32), dans lequel au moins un microglissement de l'embrayage (10) est réglé de manière ciblée au moyen d'un dispositif de calcul électronique (34) de la chaîne cinématique (12), par lequel des couples peuvent être transmis entre l'arbre de sortie (16) et l'arbre d'entrée de transmission (32), par lequel l'embrayage (10) est actionné avec le microglissement pendant au moins une première phase de fonctionnement (56, 58), dans lequel une surpression de l'embrayage (10) est réglée de manière ciblée au moyen du dispositif de calcul électronique (34), par lequel l'embrayage (10) est actionné sans glissement pendant au moins une deuxième phase de fonctionnement (62, 64) différente de l'au moins une première phase de fonctionnement (56, 58), et dans lequel le microglissement est régulé au moyen d'un régulateur (36) du dispositif de calcul électronique (34),
**caractérisé en ce que**
la première phase de fonctionnement (56, 58) est effectuée comme une phase d'essai dans laquelle une commutation de la transmission (18) n'est pas effectuée et au moins un paramètre de régulation pour la régulation du microglissement est déterminé, dans lequel la phase d'essai est suivie dans le temps par la deuxième phase de fonctionnement (62, 64), dans laquelle une commutation de la transmission (18) n'est pas effectuée, dans lequel un microglissement supplémentaire de l'embrayage (10) est réglé de manière ciblée après la deuxième phase de fonctionnement (62, 64) au moyen du dispositif de calcul électronique (34), par lequel l'embrayage (10) est actionné avec le microglissement supplémentaire pendant une troisième phase de fonctionnement (60) qui suit la deuxième phase de fonctionnement (62, 64), dans lequel le paramètre de régulation déterminé pendant la phase d'essai est utilisé pendant la troisième phase de fonctionnement (60) pour réguler le microglissement, et dans lequel, dans la troisième phase de fonctionnement (60) suivant la deuxième phase de fonctionnement (62, 64), dans laquelle le paramètre de régulation déterminé est utilisé pour réguler le microglissement, une commutation de la transmission (18) de la chaîne cinématique (12) est effectuée.

2. Procédé selon la revendication 1,
**caractérisé en ce que**
l'embrayage (10) est actionné avec la surpression pendant les phases de temps qui se situent hors des phases de commutation pendant lesquelles au moins une commutation d'une transmission (18) de la chaîne cinématique (12) est effectuée.

3. Procédé selon l'une quelconque des revendications précédentes,
**caractérisé en ce que**
l'embrayage (10) est actionné avec la surpression pendant des conduites à vitesse constante du véhicule automobile.

4. Procédé selon l'une quelconque des revendications précédentes,
**caractérisé en ce que**
la phase d'essai est réglée lorsqu'au moins un paramètre change.

5. Procédé selon la revendication 4,
**caractérisé en ce que**
le paramètre comprend une vitesse de rotation d'un moteur d'entraînement (14) de la chaîne cinématique (12) et/ou un couple fourni par le moteur d'entraînement (14) et/ou une accélération du véhicule automobile.

6. Procédé selon l'une quelconque des revendications précédentes,
**caractérisé en ce que**
la deuxième phase de fonctionnement (62, 64) est respectivement réglée ou terminée après l'écoulement d'une période de temps prédéterminée.

7. Véhicule automobile, avec une chaîne cinématique (12) conçue pour l'entraînement du véhicule automobile, qui présente au moins un embrayage (10), un moteur d'entraînement (14) avec un arbre de sortie (16), une transmission (18) avec un arbre d'entrée de transmission (32) et un dispositif de calcul électronique (34), qui est conçu pour régler de manière ciblée au moins un microglissement de l'embrayage (10), par lequel des couples peuvent être transmis entre l'arbre de sortie (16) et l'arbre d'entrée de transmission (32), afin d'actionner ainsi l'embrayage (10) avec le microglissement pendant au moins une phase de fonctionnement (56, 58), dans lequel le dispositif électronique de calcul (34) est conçu pour régler de manière ciblée une surpression de l'embrayage (10) afin d'actionner l'embrayage (10) sans glissement pendant au moins une deuxième phase de fonctionnement (62, 64) différente de l'au moins une phase de fonctionnement (56, 58), et dans lequel le microglissement est régulé au moyen d'un régulateur (36) du dispositif électronique de calcul (34),
**caractérisé en ce que**
la première phase de fonctionnement (56, 58) est une phase d'essai dans laquelle une commutation de la transmission (18) n'est pas effectuée et au moins un paramètre de régulation pour la régulation du microglissement est déterminé, dans lequel la phase d'essai est suivie dans le temps par la deuxième phase de fonctionnement (62, 64), dans laquelle une commutation de la transmission (18) n'est pas effectuée, dans lequel un microglissement supplémentaire de l'embrayage (10) est réglé de manière ciblée après la deuxième phase de fonctionnement (62, 64) au moyen du dispositif de calcul électronique (34), par lequel l'embrayage (10) est actionné avec le microglissement supplémentaire pendant une troisième phase de fonctionnement (60) qui suit la deuxième phase de fonctionnement (62, 64), dans lequel le paramètre de régulation déterminé pendant la phase d'essai est utilisé pendant la troisième phase de fonctionnement (60) pour réguler le microglissement, et dans lequel, dans la troisième phase de fonctionnement (60) suivant la deuxième phase de fonctionnement (62, 64), dans laquelle le paramètre de régulation déterminé est utilisé pour réguler le microglissement, une commutation de la transmission (18) de la chaîne cinématique (12) est effectuée.
